# EUROPÄISCHE PATENTSCHRIFT

(11) **EP 0 743 471 B1**
(45) Veröffentlichungstag und Bekanntmachung des Hinweises auf die Patenterteilung: **22.09.1999**
(21) Anmeldenummer: 96103094.7
(22) Anmeldetag: 29.02.1996
(51) Int. Cl.: F16F 7/10, H02K 33/16

(54) **Aktiver Schwingungstilger**
Active vibration damper
Amortisseur actif de vibration

(30) Priorität: 13.05.1995 DE 19517630
(43) Veröffentlichungstag der Anmeldung: 20.11.1996
(73) Patentinhaber: Metzeler Gimetall AG, D-64744 Breuberg (DE)
(72) Erfinder: Gugsch, Mathias, Dearborn, MI 48120 (US)
(74) Vertreter: Preissner, Nicolaus, Dipl.-Ing.

(56) Entgegenhaltungen:
- EP-A- 0 230 626
- EP-A- 0 547 469
- DE-C- 4 301 845
- US-A- 3 536 941
- NTIS TECH NOTES, Februar 1989, Seite 127 XP000005027 BHATE S ET AL: "SELF-CENTERING RECIPROCATING-PERMANENT-MAGNET MACHINE"

## Beschreibung

Die Erfindung betrifft einen aktiven Schwingungstilger, insbesondere für Motorlagerungen bei Kraftfahrzeugen, mit einem Magnetsystem, das ein in Axialrichtung beweglich geführtes Magnetgehäuse zur Aufnahme eines Permanentmagneten aufweist und mit einer elektrischen Tauchspule, die senkrecht von einer Tragplatte abragt und in das Magnetgehäuse eintaucht, wobei die Tragplatte mit einem schwingenden Maschinenteil verbindbar ist.

Ein derartiger aktiver Schwingungstilger ist aus der DE-43 01 845 C1 bekannt. Hierbei ist ein Topfmagnet vorgesehen, in dem ein Permanantmagnet angeordnet ist. Der Topfmagnet wird im Bereich seines Innenumfangs an einem axialen Vorsprung gleitbeweglich geführt, der von einer Tragplatte abragt. Die Tragplatte ist mit einem schwingenden Maschinenteil verbindbar. Über ein Federelement aus elastomerem Material ist an der Tragplatte ein Randbereich federnd angeordnet, der über eine Preßpassung mit dem Außenumfang des Topfmagnetes verbunden ist. In einen Ringspalt des Topfmagneten taucht eine elektrische Tauchspule ein, die senkrecht von der Tragplatte abragt. Durch die Ansteuerung der Tauchspule können die in das Maschinenteil eingeleiteten Schwingungen reduziert oder durch Einleitung einer Gegenschwingung getilgt werden. In Abhängigkeit von der Schwingung des Maschinenteils wird ein Wechselstrom in die Tauchspule eingeleitet, so daß eine Kraft zwischen dem Topfmagneten und der Tragplatte entsteht, die sich in axialer Richtung an den aneinander benachbarten, schwingfähig zueinander aufgehängten Teilen abstützt.

Ein anderer Schwingungstilger ist aus der DE-41 38 405 C1 bekannt. Bei dem magnetelastischen Schwingungstilger ist ein topfförmige als Trägheitsmasse dienendes Gehäuse vorgesehen, das der Aufnahme eines Spulenträgers dient. Zwischen dieser Zusatzmasse und einer Rückschlußplatte ist ein Federelement aus elastomerem Material angeordnet. Das Federelement ist durch den Permanentmagneten vorgespannt und der Rückschlußplatte bis auf einen geringen Abstand angenähert. Die Magnetspule ist mit einer Wechselspannung beaufschlagbar. Da sich der Spalt zwischen der Rückschlußplatte und dem Magnet während der bestimmungsgemäßen Verwendung stets verändert, zeigt dieser bekannte Schwingungstilger schwer vorherbestimmbare, nicht-lineare Eigenschaften.

Ein weiterer aktiver Schwingungstilger ist aus der DE-40 21 039 A1 bekannt. Dieser Schwingungstilger ist in einem hydraulisch dämpfenden Motorlager angeordnet und bildet ein Entkopplungssystem für hochfrequente Schwingungen, das in Abhängigkeit vorgegebener Betriebsparameter elektrodynamisch in Schwingungen versetzbar ist. Der Schwingungstilger weist einen ringförmigen Permanentmagneten auf, der von einer elastischen Membran überspannt ist. An der elastischen Membran ist eine elektrische Tauchspule festgelegt. Die Spule umschließt dabei eine topfförmige Tilgermasse, die ebenfalls mit der Membran verbunden ist und auf die noch zusätzlich noch eine weitere Tilgermasse aufgesetzt werden kann. Zu Ansteuerung dieses Entkopplungssystems ist ein Sensor vorgesehen, der an eine nicht näher dargestellte Stromversorgung angeschlossen ist.

Ein besonderes Problem stellt die Tilgung von im Leerlauf auftretenden Schwingungen bei 4-Zylinder-Motoren dar. Hierbei hat es sich gezeigt, daß die bekannten Schwingungstilger bei Betriebsfrequenzen von etwa 20 Hz kein lineares Verhalten aufweisen.

Demgemäß liegt der Erfindung die Aufgabe zugrunde, einen aktiven Schwingungstilger vorzuschlagen, der bei geringerem Gewicht und Abmessungen lineares Verhalten im gesamten Arbeitsbereich aufweist.

Zur Lösung dieser Aufgabe ist bei einem Schwingungstilger der eingangs genannten Art erfindungsgemäß vorgesehen, daß das Magnetsystem in Axialrichtung durch ein magnetisches Streufeld gehalten ist, das zwischen dem Magnetsystem und stationären ferromagnetischen Mitteln vorliegt.

Bei dem erfindungsgemäßen Schwingungstilger wird das Streufeld des magnetischen Kreises als Rückstellfeder genutzt, wodurch im gesamten Betriebsbereich eine linear steigende Rückstellkraft erzeugbar ist. Insbesondere liegt bei niedrigen Betriebsfrequenzen von etwa 20 Hz ein lineares Verhalten vor, da im unteren Frequenzbereich eine erhöhte Kraftabgabe erfolgt. Der erfindungsgemäße Schwingungstilger zeichnet sich durch geringes Gewicht und Abmessungen aus, da sowohl das Magnetgehäuse als auch der Permanentmagnet als Trägheitsmasse dient. Erfindungsgemäß ist das gesamte Magnetsystem in Axialrichtung frei beweglich gelagert und stellt somit die Trägheitsmasse dar, wodurch das Verhältnis von Gesamtmasse zu Trägheitsmasse optimal ausgenutzt wird.

Vorteilhafte Ausgestaltungen der Erfindung sind in den Unteransprüchen aufgeführt.

Vorteilhaft ist das Magnetsystem an einem stationären, zentralen Führungsbolzen geführt. Hierdurch wird eine exakte Vertikalführung der Spule im Magnetspalt auch bei auftretenden Querkräften erzielt.

Zweckmäßig ist mindestens ein Axiallager zur Führung des Magnetsystems an den Führungsbolzen vorgesehen. Hierbei können alternativ Gleit-, Rollen- oder Kugellager zur Führung des Trägheitsmassensystems zum Einsatz kommen.

In weiterer Ausgestaltung wird vorgeschlagen, daß die Rückstellkraft über eine Veränderung der Formgebung der stationären ferromagnetischen Mittel einstellbar ist. Beispielsweise kann die Rückstellkraft dadurch verändert werden, daß ferromagnetische Mittel mit verschiedenen Randphasen zum Einsatz kommen.

Bei einer erfindungsgemäßen Ausführungsform sind die ferromagnetischen Mittel als stationärer Metallring ausgebildet, der das Magnetgehäuse mit Abstand umgibt.

Zweckmäßig kann der Metallring an der Außenseite eines Gehäusemantels aufgebracht sein, der aus magnetisch nicht-leitendem Material besteht.

Eine Veränderung der Rückstellkraft des Schwingungstilgers kann dadurch erreicht werden, daß der Metallring verschiedene Randphasen aufweist. Durch Anbringen verschiedenartiger Metallringe kann somit die Rückstellkraft des Schwingungstilgers variiert werden.

Bei einer weiteren erfindungsgemäßen Ausführungsform sind die ferromagnetischen Mittel als stationärer Zapfen ausgebildet, der im Zentrum des Magnetgehäuses angeordnet ist.

Auch bei dieser Ausführungsform kann die Rückstellkraft dadurch verändert werden, daß der Zapfen verschiedene Randphasen aufweist.

Vorteilhaft ist der Zapfen mit Führungsbolzenteilen verschraubt. Hierdurch kann unproblematisch ein andersartig geformter Zapfen eingesetzt werden.

Vorteilhaft weist der Schwinungstilger einen das Magnetsystem mit Abstand umgebenden Gehäusemantel auf, der an seinen Stirnseiten mit Zentrierdeckel verschlossen ist, an denen der Führungsbolzen festgelegt ist. Hierbei ist vorgesehen, daß der Gehäusemantel und die Zentrierdeckel aus einem nichtferromagnetischen Material bestehen.

In weiterer Ausgestaltung wird vorgeschlagen, daß das Magnetgehäuse aus zwei Bauteilen besteht, die einen Ringspalt für die Tauchspule begrenzen. Beide Teile sind aus ferromagnetischem Material hergestellt und dienen als Rückschluß für das Magnetsystem.

Vorteilhaft sitzt die Tauchspule am freien Ende eines Hohlzylinders auf, der an der Tragplatte festgelegt ist.

Der Führungsbolzen kann außenliegende Gewindebereiche aufweisen, die der Festlegung der Zentrierdeckel dienen. Zweckmäßig überragen die Führungsbolzen die Zentrierdeckel derart, daß sich an der Ober- und Unterseite des Schwingungstilgers Direktanschraubbolzen zur Befestigung an der Kraftfahrzeugkarosserie ergeben.

Nachfolgend wird die Erfindung anhand von Ausführungsbeispielen näher erläutert, die in schematischer Weise in der Zeichnung dargestellt sind. Hierin zeigen:
- Figur 1: einen Vertikalschnitt durch ein erstes Ausführungsbeispiel eines erfindungsgemäßen Schwingungstilgers,
- Figur 2: einen Vertikalschnitt durch ein zweites Ausführungsbeispiel eines erfindungsgemäßen Schwingungstilgers, und
- Figur 3: ein Kraft-Weg-Diagramm für unterschiedliche Phasengeometrien des in Figur 1 dargestellten Schwingungstilgers.

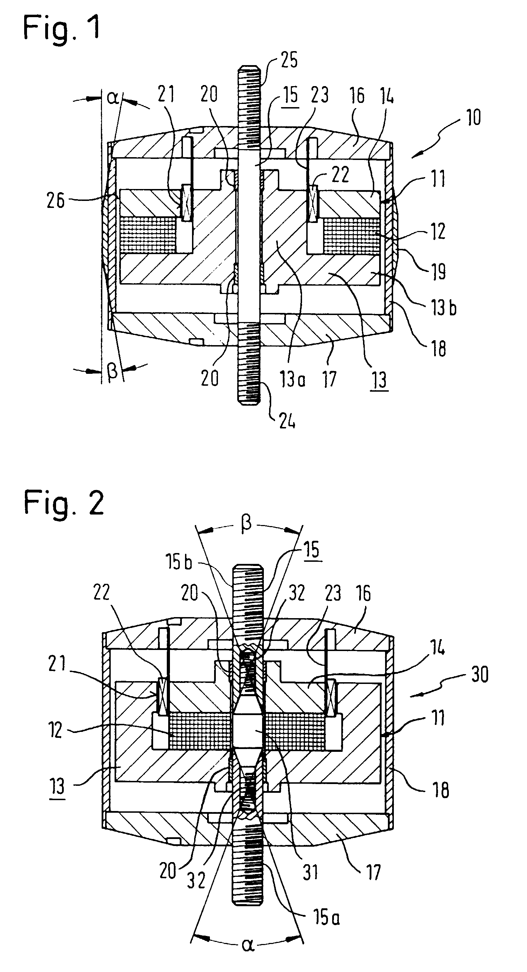

Figur 1 zeigt in schematischer Weise einen erfindungsgemäßen aktiven Schwingungstilger 10, der ein Magnetsystem 11 aufweist, das in Axialrichtung gleitbeweglich an einem Führungsbolzen 15 geführt ist. Das Magnetsystem 11 umfaßt ein Magnetgehäuse 13, das eine nährungsweise T-förmige Querschnittsform aufweist. An einem innenliegenden Bereich 13a des Magnetgehäuses 13 sind zwei beabstandete Axiallager 20 vorgesehen, die mit dem Führungsbolzen 15 zusammenwirken. Die Axiallager 20 können als Gleit-, Rollen- oder Kugellager ausgebildet sein.

Ein außenliegender in Horizontalrichtung ausgerichteter Bereich 13b des Magnetgehäuses 13 dient der Aufnahme eines Permanentmagneten 12, auf dem eine ringförmige Polplatte 14 aufliegt.

Die Endbereiche des Führungsbolzen 15 sind mit Außengewinden 24, 25 versehen, die der Festlegung von beabstandeten Zentrierdeckel 16, 17 dienen. Da der Führungsbolzen 15 die Oberseiten der Zentrierdeckel 16, 17 überragt, werden hier gleichzeitig zwei Anschraubbolzen geschaffen, die der Befestigung des Schwingungstilgers an der Fahrzeugkarosserie dienen. Zwischen den Zentrierdekkeln 16, 17 ist ein zylinderförmiger Gehäusemantel 18 aufgenommen, der mit dem Außenumfang des Trägheitsmassensystems 11 einen Spalt 26 begrenzt. An der Außenseite des Gehäusemantels 18 ist ein Metallring 19 lösbar festgelegt, der mit dem Trägheitsmassensystem 11 zusammenwirkt. Durch Variation der am Metallring 19 vorgesehenen Randphasen α, β können unterschiedliche Rückstellkräfte erzeugt werden.

Die Polplatte 14, die an der Oberseite des Permanentmagneten 12 aufliegt, begrenzt mit dem innenliegenden Bereich 13a des Magnetgehäuses 13 einen Ringspalt 21. In den Ringspalt 21 taucht eine Tauchspule 22 ein, die am freien Endbereich eines Hohlzylinders 23 festgelegt ist. Der Hohlzylinder 23 ist an dem Zentrierdeckel 16 festgelegt und ragt senkrecht von dessen Innenseite ab.

Das Magnetgehäuse 13 und die Polplatte 14 sind aus einem ferromagnetischen Material hergestellt. Darüber hinaus besteht auch der Metallring 19, der an der Außenseite des Gehäusemantels 18 lösbar befestigt ist, aus einem derartigen Material. Demgegenüber sind die Zentrierdeckel 16, 17 und der Gehäusemantel 18 aus einem magnetisch nicht-leitendenden Material, beispielsweise Aluminium hergestellt.

Die Tauchspule 22 ist mit einer nicht näher dargestellten Stromversorgungseinheit verbunden. Da die Tauchspule stationär an dem Zentrierdeckel 16 angeordnet ist, wird der Anschluß an die Stromversorgung vereinfacht.

Im eingebauten Zustand des Schwingungstilgers 10 wird das Magnetsystem 11 durch das Streufeld des magnetischen Kreises statisch in der Mittelstellung gehalten. Weiterhin wird das Streufeld des magnetischen Kreises als Rückstellfeder genutzt, wodurch in weiten Bereichen eine linear steigende Rückstellkraft erzeugbar ist. Hierbei kann die Rückstellkraft durch Aufbringen von Metallringen 19 mit verschiedenen Randphasen α, β variiert werden.

Alle Teile des in Axialrichtung gleitbeweglich geführten Trägheitsmassensystems 11, insbesondere auch der Permamentmagnet 12, dienen als Trägheitsmasse. Somit wird bei geringem Gewicht und Abmessungen eine hohe Trägheitsmasse erzielt.

Figur 2 zeigt einen weiteren erfindungsgemäßen Schwingungstilger 30, zu dessen Beschreibung für gleiche oder funktionsgleiche Teile die in Figur 1 eingeführten Bezugszeichen verwendet werden sollen. Der Schwingungstilger 30 weist einen zentralen Führungsbolzen 15 auf, der der Festlegung von beabstandeten Zentrierdeckeln 16, 17 dient. Zwischen den Zentrierdeckeln 16, 17 ist ein zylinderförmiger Gehäusemantel 18 angeordnet. An dem Führungsbolzen 15 ist ein Trägheitsmassensystem 11 in Axialrichtung beweglich geführt. Das Magnetsystem 11 weist ein im Querschnitt nährungsweise U-förmiges Magnetgehäuse 13 auf, das der Aufnahme eines ringförmigen Permanentmagneten 12 dient. Auf dem Permanentmagneten 12 liegt eine Polplatte 14 auf, die mit dem Magnetgehäuse 13 einen Ringspalt 21 begrenzt. In den Ringspalt 21 taucht eine Tauchspule 22 ein, die am freien Ende eines Hohlzylinders 23 angeordnet ist. Der Hohlzylinder 23 ist an dem Zentrierdeckel 16 befestigt. Um das Trägheitsmassensystems 11 sind an dem Magnetgehäuse 13 und an der Polplatte 14 Axiallager 20 vorgesehen. Diese können als Gleit-, Rollen- oder Kugellager ausgebildet sein.

Der wesentliche Unterschied zwischen dem Schwingungstilger 30 gemäß Figur 2 und dem Schwingungstilger 10 gemäß Figur 1 besteht in der Ausgestaltung der ferromagnetischen Mittel. Bei dem Schwingungstilger 30 weist der Führungsbolzen 15 einen Zapfen 31 auf, der stirnseitig mit axialen Schraubbolzen 32 versehen ist und die hier die ferromagnetischen Mittel darstellen. Die Schraubbolzen 32 sind mit Führungsbolzenteilen 15a, 15b verschraubt. Der Zapfen 31, der aus ferromagnetischem Material besteht, hat die gleiche Funktion wie der Metallring 19 des Schwingungstilgers 10 gemäß Figur 1. Durch den Einsatz von Zapfen 31 mit verschiedenen Randphasen α, β kann die Rückstellkraft des Schwingungstilgers 13 variiert werden.

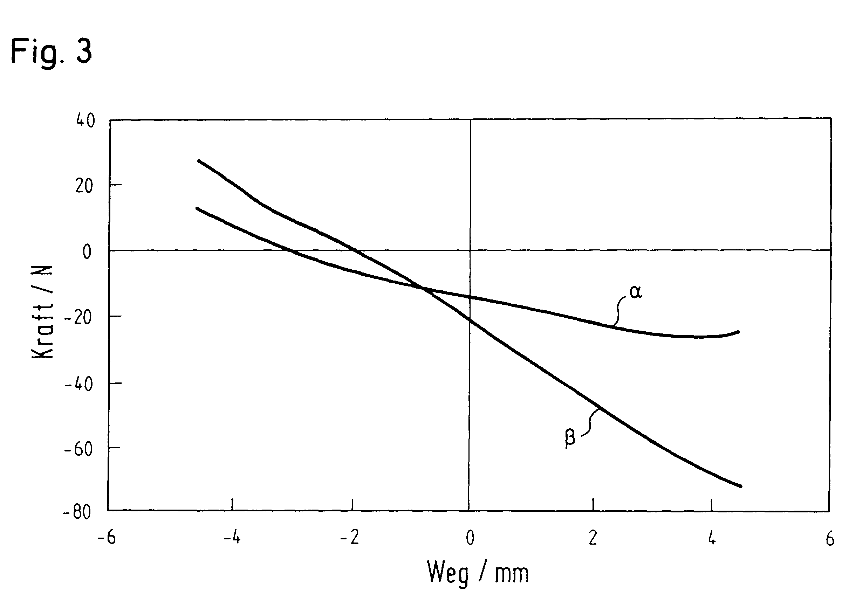

Figur 3 zeigt ein Diagramm mit Kraft-Weg-Kennlinien für unterschiedliche Randphasen α, β des Schwingungstilgers 10 gemäß Figur 1. Die Variation der Rückstellkraft wurde durch Einbau von Metallringen mit verschiedenen Randphasen α, β bei ansonsten gleichbleibenden Schwingungstilger 10 erreicht. Eine prinzipiell ähnliche Variation der Rückstellkraft ist bei dem Schwingungstilger 30 gemäß Figur 2 durch Einsatz von Zapfen 31 mit verschiedenen Randphasen α, β erreichbar.

Den Schwingungstilgern 10, 30 ist gemeinsam, daß durch die vorgeschlagene Bauweise ein niedriger äußerer Streufluß und eine staub- und feuchtigkeitsdichte Kapselung der beweglichen Bauteile erreicht wird. Für gesteigerte Anforderungen ist es auch denkbar, die axiale Zentrierung des beweglichen Trägheitsmassensystems 11 über einen überlagerten Gleichstrom zu erreichen, der über einen zweiten Regelkreis gesteuert wird.

## Patentansprüche

1. Aktiver Schwingungstilger, insbesondere für Motorlagerungen bei Kraftfahrzeugen, mit einem Magnetsystem (11), das ein in Axialrichtung beweglich geführtes Magnetgehäuse (13) zur Aufnahme eines Permanentmagneten (12) aufweist und mit einer elektrischen Tauchspule, die senkrecht von einer Tragplatte abragt und in das Magnetgehäuse (13) eintaucht, wobei die Tragplatte mit einem schwingenden Maschinenteil verbindbar ist, dadurch gekennzeichnet, daß das Magnetsystem (11) in Axialrichtung durch ein magnetisches Streufeld gehalten ist, das zwischen dem Magnetsystem (11) und stationären, ferromagnetischen Mitteln (19, 31) vorliegt.

2. Schwingungstilger nach Anspruch 1, dadurch gekennzeichnet, daß das Magnetsystem (11) an einem stationären, zentralen Führungsbolzen (15) geführt ist.

3. Schwingungstilger nach Anspruch 1 oder 2, dadurch gekennzeichnet, daß mindestens ein Axiallager (20) zur Führung des Magnetsystems (11) an dem Führungsbolzen (15) vorgesehen ist.

4. Schwingungstilger nach einem der Ansprüche 1 bis 3, dadurch gekennzeichnet, daß die Rückstellkraft über eine Veränderung der Formgebung der stationären, ferromagnetischen Mittel (19, 31) einstellbar ist.

5. Schwingungstilger nach einem der Ansprüche 1 bis 4, dadurch gekennzeichnet, daß die ferromagnetischen Mittel als stationärer Metallring (19) ausgebildet sind, der das Magnetgehäuse (13) mit Abstand umgibt.

6. Schwingungstilger nach Anspruch 5, dadurch gekennzeichnet, daß der Metallring (19) an der Außenseite eines Gehäusemantels (18) aufgebracht ist, der aus magnetisch nicht-leitendem Material besteht.

7. Schwingungstilger nach Anspruch 5 oder 6, dadurch gekennzeichnet, daß der Metallring (19) verschiedene Randphasen α, β aufweist, mit denen die Rückstellkraft veränderbar ist.

8. Schwingungstilger nach einem der Ansprüche 1 bis 4, dadurch gekennzeichnet, daß die ferromagnetischen Mittel als stationärer Zapfen (31) ausgebildet sind, der im Zentrum des Magnetgehäuses (13) angeordnet ist.

9. Schwingungstilger nach Anspruch 8, dadurch gekennzeichnet, daß der Zapfen (31) verschiedene Randphasen α, β aufweist, mit denen die Rückstellkraft veränderbar ist.

10. Schwingungstilger nach Anspruch 8 oder 9, dadurch geknnzeichnet, daß der Zapfen (31) mit Führungsbolzenteilen (15a, 15b) verschraubt ist.

11. Schwingungstilger nach einem der Ansprüche 1 bis 10, dadurch gekennzeichnet, daß der Schwingungstilger (10, 30) einen das Magnetsystem (11) mit Abstand umgebenen Gehäusemantel (18) aufweist, der an seinen Stirnseiten mit Zentrierdeckeln (16, 17) verschlossen ist, an denen der Führungsbolzen (15) festgelegt ist.

12. Schwingungstilger nach Anspruch 11, dadurch gekennzeichnet, daß der Gehäusemantel (18) und die Zentrierdeckel (16, 17) aus einem nicht-ferromagnetischen Material bestehen.

13. Schwingungstilger nach einem der Ansprüche 1 bis 12, dadurch gekennzeichnet, daß das Magnetgehäuse (13) aus zwei Bauteilen besteht, die einen Ringspalt (21) für die Tauchspule (22) begrenzen.

14. Schwingungstilger nach einem der Ansprüche 1 bis 13, dadurch gekennzeichnet, daß die Tauchspule (22) am freien Ende eines Hohlzylinders (23) aufsitzt, der an der Tragplatte festgelegt ist.

15. Schwingungstilger nach einem der Ansprüche 1 bis 14, dadurch gekennzeichnet, daß der Führungsbolzen (15) außenliegende Gewindebereiche (24, 25) aufweist.

## Claims

1. An active vibration damper, more particularly for automotive engine mounting, including a magnet system (11) comprising a magnet housing (13) guided axially movable for accommodating a permanent magnet (12) and including an electric moving coil protruding perpendicularly from a mounting plate and moving into said magnet housing (13), said mounting plate being connectable to a vibrating machine part, characterized in that said magnet system (11) is held axially by a magnetic stray field present between said magnet system (11) and stationary ferromagnetic means (19, 31).

2. The vibration damper as set forth in claim 1, characterized in that said magnet system (11) is guided on a stationary central guide bolt (15).

3. The vibration damper as set forth in claim 1 or 2, characterized in that at least one thrust bearing (20) is provided for guiding said magnet system (11) on said guide bolt (15).

4. The vibration damper as set forth in any of the claims 1 to 3, characterized in that the return force is adjustable via a change in shape of said stationary ferromagnetic means (19, 31).

5. The vibration damper as set forth in any of the claims 1 to 4, characterized in that said ferromagnetic means are configured as a stationary metal ring (19) surrounding said magnet housing (13) spaced away therefrom.

6. The vibration damper as set forth in claim 5, characterized in that said metal ring (19) is applied to the outer side of a barrel (18) consisting of a magnetically non-conducting material.

7. The vibration damper as set forth in claim 5 or 6, characterized in that said metal ring (19) comprises differing edge chamfers α, β with which said return force is variable.

8. The vibration damper as set forth in any of the claims 1 to 4, characterized in that said ferromagnetic means (19, 31) are configured as a stationary pin (31) arranged in the center of said magnet housing (13).

9. The vibration damper as set forth in claim 8, characterized in that said pin (31) comprises differing edge chamfers α, β with which said return force is variable.

10. The vibration damper as set forth in claim 8 or 9, characterized in that said pin (31) is screwed to guide bolt parts (15a, 15b).

11. The vibration damper as set forth in any of the claims 1 to 10, characterized in that said vibration damper (10, 30) comprises a barrel (18) surrounding said magnet system (11) spaced away therefrom, said barrel (18) being closed off at its face ends by centering covers (16, 17) to which said guide bolt (15) is attached.

12. The vibration damper as set forth in claim 11, characterized in that said barrel (18) and said centering covers (16, 17) consist of a non-ferromagnetic material.

13. The vibration damper as set forth in any of the claims 1 to 12, characterized in that said magnet housing (13) consists of two components defining an annular gap (21) for said moving coil (22).

14. The vibration damper as set forth in any of the claims 1 to 13, characterized in that said moving coil (22) is mounted at the free end of a hollow cylinder (23) defined at said mounting plate.

15. The vibration damper as set forth in any of the claims 1 to 14, characterized in that said guide bolt (15) comprises external threaded portions (24, 25).

## Revendications

1. Amortisseur actif de vibrations, en particulier pour le montage de moteurs dans des véhicules automobiles, comprenant un système magnétique (11) qui comprend un boîtier magnétique (13) guidé en déplacement en direction axiale et destiné à recevoir un aimant permanent (12), et une bobine électrique mobile, laquelle dépasse perpendiculairement d'une plaque de support et plonge dans le boîtier magnétique (13), ladite plaque de support pouvant être reliée à une partie de machine en vibrations, caractérisé en ce que le système magnétique (11) est maintenu en direction axiale par un champ magnétique de fuites, présent entre le système magnétique (11) et des organes stationnaires ferromagnétiques (19, 31).

2. Amortisseur actif de vibrations selon la revendication 1, caractérisé en ce que le système magnétique (11) est guidé sur un goujon de guidage stationnaire central (15).

3. Amortisseur actif de vibrations selon l'une ou l'autre des revendications 1 et 2, caractérisé en ce qu'il est prévu au moins un palier axial (20) pour le guidage du système magnétique (11) sur le goujon de guidage (15).

4. Amortisseur actif de vibrations selon l'une des revendications 1 à 3, caractérisé en ce que la force de rappel est réglable par modification de la conformation des organes stationnaires ferromagnétiques (19, 31).

5. Amortisseur actif de vibrations selon l'une des revendications 1 à 4, caractérisé en ce que les organes ferromagnétiques sont réalisés sous forme d'une bague métallique stationnaire (19), laquelle entoure le boîtier magnétique (13) à distance.

6. Amortisseur actif de vibrations selon la revendication 5, caractérisé en ce que la bague métallique (19) est montée sur la face extérieure d'une enveloppe de boîtier (18) constituée en matériau magnétiquement non-conducteur.

7. Amortisseur actif de vibrations selon l'une ou l'autre des revendications 5 et 6, caractérisé en ce que la bague métallique (19) présente des phases de bordure différentes α, β, au moyen desquelles la force de rappel peut être modifiée.

8. Amortisseur actif de vibrations selon l'une des revendications 1 à 4, caractérisé en ce que les organes ferromagnétiques sont réalisés sous forme d'un tenon stationnaire (31), agencé au centre du boîtier magnétique (13).

9. Amortisseur actif de vibrations selon la revendication 8, caractérisé en ce que le tenon (31) présente des phases de bordure différentes α, *β,* au moyen desquelles la force de rappel peut être modifiée.

10. Amortisseur actif de vibrations selon l'une ou l'autre des revendications 8 et 9, caractérisé en ce que le tenon (31) est vissé à des parties (15a, 15b) du goujon de guidage.

11. Amortisseur actif de vibrations selon l'une des revendications 1 à 10, caractérisé en ce que l'amortisseur actif de vibrations (10, 30) comporte une enveloppe de boîtier (18) qui entoure à distance le système magnétique (11), et qui est refermé sur ses côtés frontaux au moyen de couvercles de centrage (16, 17) sur lesquels est fixé le goujon de guidage (15).

12. Amortisseur actif de vibrations selon la revendication 11, caractérisé en ce que l'enveloppe de boîtier (18) et les couvercles de centrage (16, 17) sont réalisés en un matériau non ferromagnétique.

13. Amortisseur actif de vibrations selon l'une des revendications 1 à 12, caractérisé en ce que le boîtier magnétique (13) est constitué de deux composants qui délimitent une fente annulaire (21) pour la bobine mobile (22).

14. Amortisseur actif de vibrations selon l'une des revendications 1 à 13, caractérisé en ce que la bobine mobile (22) repose à l'extrémité libre d'un cylindre creux (23), lequel est fixé sur la plaque de support.

15. Amortisseur actif de vibrations selon l'une des revendications 1 à 14, caractérisé en ce que le goujon de guidage (15) présente des régions filetées extérieures (24, 25).
